# EUROPÄISCHE PATENTANMELDUNG

(11) **EP 0 636 317 A2**
(43) Veröffentlichungstag der Anmeldung: **01.02.1995**
(21) Anmeldenummer: 94111096.7
(22) Anmeldetag: 16.07.1994
(51) Int. Cl.: A21D 2/16

(54) **Hilfsmittel zur Herstellung hefegetriebener Backwaren**

(30) Priorität: 31.07.1993 DE 4325742
(71) Anmelder: Th. Goldschmidt AG, D-45127 Essen (DE)
(72) Erfinder:

(57) **Zusammenfassung**

Hilfsmittel zur Herstellung hefegetriebener Backwaren, welches
a) Stearoyllactyllactate in Form ihrer Natrium-, Kalium- oder Calciumsalze,
b) Polyglycerinmonofettsäureester von Fettsäuren mit 8 bis 22 Kohlenstoffatomen
   im Gewichtsverhältnis a : b gleich 1 : 9 bis 9 : 1, sowie
c) gegebenenfalls zusätzlich Glycerinfettsäureester enthält.

Die Hilfsmittel lassen sich in technisch einfacher Weise herstellen und sind hochwirksam.

## Beschreibung

Die Erfindung betrifft Hilfsmittel zur Herstellung hefegetriebener Backwaren.

Üblicher Hefeteig besteht entsprechend einer Grundrezeptur aus Mehl, Wasser, Salz und Hefe. Seit sechs Jahrzehnten wird die Produktion von hefegetriebenen Weizenbackwaren jedoch durch den gezielten Zusatz von oberflächenaktiven Hilfsstoffen unterstützt. Wesentliche Bedeutung haben hierbei Emulgatoren erlangt, die in der Lage sind, die besonderen Eigenschaften der im Weizenmehl enthaltenen Proteine (Gluten) auszunutzen und durch Wechselwirkung mit Gluten beim Fermentations- und Backprozeß die Entwicklung von Krume und Kruste positiv beeinflussen.

In den europäischen Ländern, in denen knusprige Backwaren bevorzugt werden, ist der meistverwendete Emulgator für diesen Zweck der Diacetylweinsäureester von Glycerinmonostearat (Schuster, G., Adams, W., ZFL 31 (1980) 265 bis 270). Derartige Produkte sind im Handel zum Beispiel unter den Bezeichnungen Dataester, DATEM und Datamuls erhältlich. Die Verwendung des Diacetylweinsäureesters von Glycerinmonostearat ermöglicht eine feine, aber nicht krümelnde Krume, eine gute Rösche und eine günstige Volumenentwicklung beim Backen, wobei das Volumen im Vergleich zu einem ohne Emulgator gebackenen Brot um 35 bis 38 % zunimmt. Ebenfalls wird die Frischhaltung des Brotes durch den Diacetylweinsäureester von Glycerinmonostearat positiv beeinflußt.

Prozeßtechnisch ist die Anwendung vorteilhaft, da auch bei verlängertem Fermentieren, der sogenannten Übergare, ein stabiler Teig erhalten wird. Ein Nachteil der Diacetylweinsäureester von Glycerinmonostearat ist der produktionsbedingte Gehalt an Essigsäure, der ein Verklumpen des Produktes bewirken kann, sowie der relativ niedrige Schmelzpunkt, der bei der Lagerung Schwierigkeiten verursacht.

In den Ländern Europas, in denen eher weiches Weizenbrot bevorzugt verzehrt wird, wie auch in den USA, werden als Emulgatoren häufig die Calcium- oder Natriumsalze von Stearoyllactyllactaten verwendet (US-PS 2 744 825, Schuster, G., Adams, W., ZFL 32 (1981) 153 bis 158). Zur Herstellung dieser Produkte wird ein Mol des entsprechenden Salzes der Milchsäure zunächst mit einem Mol weiterer Milchsäure und anschließend mit einem Mol Stearinsäure verestert. Die Calciumsalze der Stearoyllactyllactate sind im Handel zum Beispiel unter der Bezeichnung CSL oder Lisat C, die entsprechenden Natriumsalze unter der Bezeichnung SSL oder Lisat N erhältlich. Damit diese eine den Dataestern vergleichbare Wirkung beim Volumenzuwachs erreichen, ist der Zusatz von Fett zum Teig erforderlich. Die Krume ist bei dem Einsatz der Calcium- oder Natriumsalze von Stearoyllactyllactaten eher weich. Die Frischhaltung wird durch die Calcium- oder Natriumsalze der Stearoyllactyllactate ebenfalls verbessert.

Problematisch ist allerdings auch die Herstellung der Calcium- oder Natriumsalze von Stearoyllactyllactaten, da bei der üblichen Synthese ein sehr zähes und daher schlecht zu verarbeitendes Produkt entsteht. So wird in der US-PS 4 865 869 eine Methode beschrieben, eine Kombination von ethoxylierten Glycerinfettsäureestern mit den Calcium- oder Natriumsalzen von Stearoyllactyllactaten herzustellen, wobei ein Produkt entsteht, welches zu Flocken verarbeitet werden kann. Den Zusatz von Fett zum Brotteig kann man gemäß der IL-PS 56861 durch Zugabe von Polysorbat vermeiden.

Allerdings sind die durch diese Zumischungen entstehenden Produkte in der Wirksamkeit nicht wesentlich verbessert und in bezug auf ihre lebensmittelrechtliche Situation problematisch.

Die vorliegende Erfindung befaßt sich mit dem technischen Problem, eine besonders wirksame Emulgatorkombination als Hilfsmittel für die Herstellung von hefegetriebenen Backwaren aufzufinden, wobei die Produktion der als Hilfsmittel verwendeten Emulgatorkombination technologische Vorteile aufweisen soll.

Überraschenderweise wurde gefunden, daß diese Vorgabe durch ein Hilfsmittel erfüllt wird, welches dadurch gekennzeichnet ist, daß es
a) Stearoyllactyllactate in Form ihrer Natrium-, Kalium- oder Calciumsalze,
b) Polyglycerinmonofettsäureester von Fettsäuren mit 8 bis 22 Kohlenstoffatomen
   im Gewichtsverhältnis a : b gleich 1 : 9 bis 9 : 1, sowie
c) gegebenenfalls zusätzlich Glycerinfettsäureester enthält.

Die Fettsäuren im Polyglycerinmonofettsäureester weisen 8 bis 22 Kohlenstoffatome auf. Bevorzugt sind als Fettsäuren Stearinsäure und Palmitinsäure sowie Fettsäuregemische, die aus natürlichen Fetten, wie gehärtetem Rindertalg, gehärtetem Soja- oder Palmkernöl gewonnen werden können.

Das Polyglycerin des Polyglycerinmonofettsäureesters kann durch Kondensation von etwa 2 bis 4 Glycerineinheiten erhalten worden sein. Als Veresterungskomponente ist jedoch das Diglycerin bevorzugt. Vorzugsweise enthält es deshalb als Polyglycerinmonofettsäureester Diglycerinmonofettsäureester, insbesondere molekulardestillierten Diglycerinfettsäureester.

Die Gewichtsverhältnisse der Komponenten a : b sind vorzugsweise 2 : 8 bis 8 : 2, insbesondere 4 : 6 bis 6 : 4, besonders bevorzugt 1 : 1.

Zur Herstellung des Gemisches wird vorzugsweise der Polyglycerinfettsäureester dem heißen Stearoyllactyllactat flüssig zudosiert.

Dem Gemisch kann eine kleine Menge, etwa 2 bis 10 Gew.-%, bezogen auf Komponenten a und b, Rindertalg oder anderer Triglyceride zugesetzt werden. Gegebenenfalls können bis zu 20 Gew.-% des Polyglycerinmonofettsäureesters durch Zugabe von Rindertalg oder anderen Triglyceriden ersetzt werden.

Zur Untersuchung des Verhaltens von Emulgatoren bei der Herstellung von hefegetriebenen Backwaren wird in Anlehnung an ein Standardverfahren der Bundesanstalt für Getreideforschung (Detmold) folgende Teigrezeptur bereitet (Arbeitsgemeinschaft Getreideforschung, Standard-Methoden für Getreide, Mehl, Brot, 6. Aufl., Moritz Schäfer, Detmold, 1978):
492,5 g Mehl Typ 550
300 g Wasser gemäß Farinogramm
30 g Hefe
1,6 g reiner Emulgator (= Hilfsmittel)
7,5 g Salz
Der Teig wird mit 600 Hüben des Diosna-Laborkneters im Schnellgang homogenisiert und bei 32°C und 85 % rel. Luftfeuchtigkeit 40 Minuten vorgegärt. Dann wird der Teig neu geknetet und in zwei Brote zu je 400 g geteilt. Im Standardkasten (1000 cm³) wird die Endgare ebenfalls bei 32°C und 80 bis 85 % rel. Luftfeuchtigkeit über 50 Minuten durchgeführt. Die Brote werden 30 Minuten im Backofen (mit Schwadenzugabe) bei 230°C gebacken. Nach 2 Stunden Abkühlen wird das Volumen gemessen und mit einem am gleichen Tag gebackenen Brot ohne Emulgatorzusatz verglichen.

Als Emulgatoren werden verwendet:
Glycerinmonostearat (GMS, 90 %): verwendet wird das Handelsprodukt Tegomuls 90 der Th. Goldschmidt AG;
Diacetylweinsäureester von Glycerinmonostearat: verwendet wird das Handelsprodukt Datamuls 4820 der Th. Goldschmidt AG;
Calciumstearoyllactyllactat: verwendet wird das Handelsprodukt Lisat C der Th. Goldschmidt AG;
Natriumstearoyllactyllactat: verwendet wird das Handelsprodukt Lisat N der Th. Goldschmidt AG;
Diglycerinstearat: verwendet wird das Handelsprodukt DS-100 A der Riken Co.

Als Coemulgatoren werden handelsübliche Backmargarine und Rindertalg verwendet.

Es wird folgendes Backergebnis erzielt:

**Tabelle 1**

| Backergebnisse mit verschiedenen Emulgatoren | |
|---|---|
| Emulgator | Volumenzuwachs, rel. zu einer Probe ohne Emulgator |
| A (Glycerinmonostearat 90 %ig) | 20 % |
| B (Diacetylweinsäureester von Glycerinmonostearat) | 38 % |
| C (Ca-Stearoyllactyllactat) | 25 % |
| D (Na-Stearoyllactyllactat) | 24 % |
| E (Diglycerinstearat) | 35 % |
| C/Fett 1 : 4 | 37 % |
| D/Fett 1 : 4 | 38 % |
| C/A 1 : 1 | 35 % |
| C/E/Rindertalg 5 : 4 : 1 | 45 % |
| C/E 1 : 1 | 59 % |
| C/E 1 : 1 | 58 % |

Es zeigt sich, daß das erfindungsgemäße Hilfsmittel aus Diglycerinstearat und Stearoyllactyllactaten den höchsten Wirkungsgrad bei der Herstellung von Hefeweizenbrot hat.

Es ergeben sich folgende technologische Vorteile: Die erfindungsgemäße Emulgatorkombination hat das gleiche Einsatzspektrum wie herkömmlicher Dataester, erzielt jedoch ein höheres Volumen bei gleicher Einsatzkonzentration bzw. bei verringerter Einsatzkonzentration einen vergleichbaren Volumenzuwachs.

Die Untersuchung der Mischung von Diglycerinstearat mit Calciumstearoyllactyllactat bzw. Natriumstearoyllactyllactat mittels Farinograph, Maturograph und Ofentriebgerät zeigt im Tabellenvergleich (Tabelle 2) wie auch im Vergleich mit Literaturwerten (Mettler, E., Seibel, W., Brümmer, J.-M., Pfeilsticker, K., Getreide, Mehl und Brot 45 (1991) 145 bis 152), daß die Eigenschaften der erfindungsgemäßen Emulgatorkombinationen denen des Diacetylweinsäureesters entsprechen bzw. überlegen sind.

Ein in üblicher Weise gemessenes Farinogramm zeigt die gute und haltbare Konsistenz des mit der Mischung von Diglycerinstearat und Calciumstearoyllactyllactat CSL/DGS hergestellten Teiges.

Ein entsprechendes Maturogramm und der Ofentrieb unter Verwendung des Gemisches von Calciumstearoyllactyllactat und Diglycerinstearat bzw. des Gemisches von Natriumstearoyllactyllactat und Diglycerinstearat zeigen die lange Gärstabilität auf hohem Niveau bei vergleichbaren rheologischen Eigenschaften mit dem als Standard aufgeführten Diacetylweinsäureester von Glycerinmonostearat und die ausgezeichnete Volumenentwicklung (Tabelle 2).

**Tabelle 2**

| Ergebnisse der Untersuchung im Maturographen und im Ofentriebgerät (Brabender) | | | | |
|---|---|---|---|---|
| | Ohne Emulgator | Dataester¹⁾ | SSL/DGS²⁾ | CSL/DGS³⁾ |
| Endgärzeit [min] | 45 | 51 | 60 | 60 |
| Gärstabilität [min] | 11 | 18 | 18 | 20 |
| Teigwiderstand [M.E.] | 610 | 835 | 880 | 900 |
| Teigelastizität [M.E.] | 210 | 260 | 240 | 260 |
| Ofentrieb [mL] | 55 | 145 | 120 | 180 |
| Teigvolumen [mL] | 305 | 480 | 540 | 540 |
| Gesamtvolumen [mL] | 465 | 570 | 580 | 610 |
| M.E. = Maturograph-Einheiten | | | | |

| | | | | |
|---|---|---|---|---|
| ¹⁾ Diacetylweinsäureester von Glycerinmonostearat | | | | |
| ²⁾ Gemisch von Natriumstearoyllactyllactat und Diglycerinstearat | | | | |
| ³⁾ Gemisch von Calciumstearoyllactyllactat und Diglycerinstearat | | | | |

Die Wirkungsweise von Emulgatoren wie auch die Bedeutung einzelner Faktoren im Mehl wird immer noch diskutiert (Hoseney, R.C., Getreide, Mehl und Brot, 47 (1993) 22 bis 24). Ohne die Erfindung mit einer theoretischen Erklärung zu befrachten, kann man annehmen, daß der Gehalt an Glutamin im Weizenprotein, dem Gluten, von entscheidender Bedeutung für die emulgatorunterstützte Bildung des Hefeteiges ist. Da Glutamin mit 35 % der Aminosäuren im Gluten die häufigste ist, ist bei statistischer Verteilung eine schwache Wechselwirkung der Amidfunktionen des Glutamins mit Emulgatoren wahrscheinlich. Während Stearoyllactyllactate bisher überwiegend für weiche Weizenbackwaren amerikanischen Typs genutzt wurden, können sie nun für rösche europäische Backwaren günstiger eingesetzt werden.

Neben der Anwendung bei hefegetriebenen Backwaren ist der Einsatz des erfindungsgemäßen Hilfsmittels auch bei Feinbackwaren vorteilhaft. Das Volumen und die Frischhaltung von Berliner Ballen werden verbessert. Durch eine reduzierte Fettaufnahme wird die Bekömmlichkeit dieses Gebäcks verbessert. Bei Blätterteiggebäck läßt sich mit CSL/DGS als Emulgator in den Teigschichten eine Erhöhung des Gebäcks erreichen.

Die Herstellung von Stearoyllactyllactaten wird durch die günstige Verarbeitbarkeit des Gemisches mit Diglycerinstearat positiv beeinflußt. Durch die Zugabe von Diglycerinstearaten entsteht eine flüssige, gut verarbeitbare Mischung.

Die Herstellung eines erfindungsgemäßen Hilfsmittels kann in der Weise erfolgen, daß man zu 100 g Calciumstearoyllactyllactat bei 120°C 100 g Diglycerinstearat hinzugibt. Die Mischung kann anschließend gemahlen oder versprüht werden.

## Patentansprüche

1. Hilfsmittel zur Herstellung hefegetriebener Backwaren, dadurch gekennzeichnet, daß es
a) Stearoyllactyllactate in Form ihrer Natrium-, Kalium- oder Calciumsalze,
b) Polyglycerinmonofettsäureester von Fettsäuren mit 8 bis 22 Kohlenstoffatomen
im Gewichtsverhältnis a : b gleich 1 : 9 bis 9 : 1, sowie
c) gegebenenfalls zusätzlich Glycerinfettsäureester enthält.

2. Hilfsmittel nach Anspruch 1, dadurch gekennzeichnet, daß es als Polyglycerinmonofettsäureester Diglycerinfettsäureester enthält.

3. Hilfsmittel nach Anspruch 2, dadurch gekennzeichnet, daß es als Polyglycerinmonofettsäureester molekulardestillierten Diglycerinmonofettsäureester enthält.

4. Hilfsmittel nach einem oder mehreren der vorhergehenden Ansprüche, dadurch gekennzeichnet, daß das Verhältnis der Komponenten a : b gleich 2 : 8 bis 8 : 2 ist.

5. Hilfsmittel nach einem oder mehreren der vorhergehenden Ansprüche, dadurch gekennzeichnet, daß das Verhältnis der Komponenten a : b gleich 4 : 6 bis 6 : 4 ist.

6. Hilfsmittel nach einem oder mehreren der vorhergehenden Ansprüche, dadurch gekennzeichnet, daß das Verhältnis der Komponenten a : b gleich 1 : 1 ist.
